(19) Europäisches Patentamt
European Patent Office
Office européen des brevets

(11) Veröffentlichungsnummer: **0 134 198**
**A1**

(12) # EUROPÄISCHE PATENTANMELDUNG

(21) Anmeldenummer: **84810384.2**

(22) Anmeldetag: **06.08.84**

(51) Int. Cl.⁴: **A 01 N 25/32**

(30) Priorität: **10.08.83 CH 4365/83**

(43) Veröffentlichungstag der Anmeldung: **13.03.85**
**Patentblatt 85/11**

(84) Benannte Vertragsstaaten: **BE CH DE FR GB IT LI NL**

(71) Anmelder: **CIBA-GEIGY AG, Postfach, CH-4002 Basel (CH)**

(72) Erfinder: **Pfister, Klaus, Dr., Joachimsackerstrasse 48, CH-4103 Bottmingen (CH)**
Erfinder: **Vogel, Rolf, Dr., Aumattstrasse 109, CH-4153 Reinach (CH)**
Erfinder: **Föry, Werner, Dr., Benkenstrasse 65, CH-4054 Basel (CH)**

(54) **Verwendung von Chinonderivaten zum Schützen von Kulturpflanzen vor der phytotoxischen Wirkung von Herbiziden.**

(57) Chinonderivate der untenstehenden Formel I vermögen Kulturpflanzen vor der phytotoxischen Wirkung von Herbiziden zu schützen und werden deshalb zusammen mit Herbiziden zur selektiven Unkrautbekämpfung in Nutzpflanzenkulturen verwendet.

Die Chinonderivate entsprechen der Formel I:

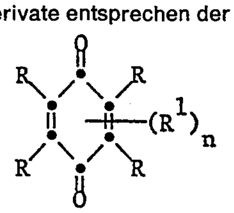

(I)

worin n eine Zahl von 1-8,

R Wasserstoff oder je zwei benachbarte R zusammen die Brückenglieder, welche nötig sind, um einen aromatischen mono- oder bicyclischen Ring zu bilden, der anstelle einer −CH= Gruppe auch ein Stickstoffatom enthalten kann, während jedes

$R^1$ Hydroxy, Halogen, Cyan, $C_1$-$C_{18}$-Alkyl, $C_3$-$C_{18}$-Alkenyl, $C_3$-$C_{18}$-Alkinyl, $C_1$-$C_{18}$-Alkoxy, $C_3$-$C_{18}$-Alkenyloxy, $C_3$-$C_{18}$-Alkinyloxy, $C_1$-$C_{18}$-Alkylthio, $C_3$-$C_{18}$-Alkenylthio, $C_1$-$C_{18}$-Alkanoyloxy, $C_3$-$C_{18}$-Alkenoyloxy, $C_1$-$C_{18}$-Alkoxycarbonyl, $C_3$-$C_{18}$-Alkenyloxycarbonyl, Carboxy-$C_1$-$C_{18}$-alkyl, $C_1$-$C_{18}$-Alkoxycarbonyl-$C_1$-$C_{18}$-alkyl, $C_3$-$C_{18}$-Alkenylcarbonyl-$C_1$-$C_{18}$-alkyl, Amino, $C_1$-$C_{18}$-Alkylamino, Di-($C_1$-$C_{18}$-alkyl)-amino, Carbamoyl, $C_1$-$C_{18}$-Alkylcarbamoyl, Di-($C_1$-$C_{18}$-alkyl)-phosphonylamido-, einen Phenyl-, Phenoxy-, Phenylthio-, Benzoyl- oder Benzoyloxyrest, welcher unsubstituiert oder durch Halogen, Cyan, Nitro, Amino, Carboxyl, $C_1$-$C_4$-Alkylthio oder $C_1$-$C_4$-Alkoxycarbonyl substituiert ist, bedeutet.

EP 0 134 198 A1

CIBA-GEIGY AG
Basel (Schweiz)

5-14536/=

# Verwendung von Chinonderivaten zum Schützen von Kulturpflanzen vor der phytotoxischen Wirkung von Herbiziden

Die vorliegende Wirkung betrifft die Verwendung von Chinonderivaten zum Schützen von Kulturpflanzen vor der phytotoxischen Wirkung von Herbiziden, Mittel, welche diese Chinonderivate enthalten, neue Chinonderivate und ihre Herstellung.

Beim Einsatz von Herbiziden werden neben den Unkräutern, manchmal ungewolltermassen auch die Kulturpflanzen geschädigt. Um diesem Problem zu begegnen, sind bereits Mittel vorgeschlagen worden, welche derartige negative Auswirkungen an den Kulturpflanzen abschwächen oder unterbinden sollen. So werden in der DE-OS 30 00 076 pflanzenschützende Mittel, welche Nitril- und Oximderivate von Aryloxyalkancarbonsäuren enthalten, beschrieben.

Es wurde nun gefunden, dass sich eine Gruppe von Chinonderivaten überraschenderweise dazu eignet, Kulturpflanzen gegen schädigende Wirkungen von Herbiziden zu schützen. Diese Chinonderivate werden daher im folgenden auch als "Gegenmittel" oder "Antidot" bezeichnet.

Chinonderivate, welche zum Schützen vor Kulturpflanzen gegen schädigende Wirkungen von aggressiven Agrarchemikalien geeignet sind, entsprechen der Formel I

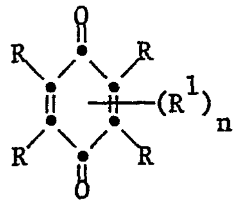

worin n eine Zahl von 1-8,

R Wasserstoff oder je zwei benachbarte R zusammen die Brückenglieder, welche nötig sind, um einen aromatischen mono- oder bicyclischen Ring zu bilden, während

$R^1$ Hydroxy, Halogen, Cyan, $C_1$-$C_{18}$-Alkyl, $C_3$-$C_{18}$-Alkenyl, $C_3$-$C_{18}$-Alkinyl, $C_1$-$C_{18}$-Alkoxy, $C_3$-$C_{18}$-Alkenyloxy, $C_3$-$C_{18}$-Alkinyloxy, $C_1$-$C_{18}$-Alkylthio, $C_3$-$C_{18}$-Alkenylthio, $C_1$-$C_{18}$-Alkanoyloxy, $C_3$-$C_{18}$-Alkenoyloxy, $C_1$-$C_{18}$-Alkoxycarbonyl, $C_3$-$C_{18}$-Alkenyloxycarbonyl, Carboxy-$C_1$-$C_{18}$-alkyl, $C_1$-$C_{18}$-Alkoxycarbonyl-$C_1$-$C_{18}$-alkyl, $C_3$-$C_{18}$-Alkenylcarbonyl-$C_1$-$C_{18}$-alkyl, Amino, $C_1$-$C_{18}$-Alkylamino, Di($C_1$-$C_{18}$-alkyl)-amino, Carbamoyl, $C_1$-$C_{18}$-Alkylcarbamoyl, Di($C_1$-$C_{13}$-alkyl)phosphonylamido-, einen Phenyl-, Phenoxy-, Phenylthio-, Benzoyl- oder Benzoyloxyrest, welcher unsubstituiert oder durch Halogen, Cyan, Nitro, Amino, Carboxy, $C_1$-$C_4$-Alkyl, $C_1$-$C_4$-Halogenalkyl, $C_1$-$C_4$-Alkoxy, $C_1$-$C_4$-Alkylthio oder $C_1$-$C_4$-Alkoxycarbonyl substituiert ist,
bedeutet.

Die durch die Gruppe

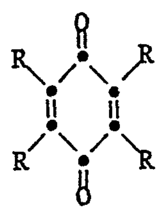

dargestellten Chinonderivate sind aromatische Verbindungen, welche 2 Carbonylgruppen paraständig enthalten, wie beispielsweise die Grundkörper, 1,4-Benzochinon, 1,4-Naphthochinon, 5,10-Anthrachinon, 1,4-Anthrachinon.

Sie sind mindestens einmal, können jedoch auch mehrfach, bis zu der grösstmöglichen Anzahl zu substituierender Stellen an jedem der Ringe durch je einen Rest $R^1$ substituiert sein.

Die obengenannten Alkyl-, Alkenyl- und Alkinylreste können geradlinig oder verzweigt sein. Bei der Verzweigung kommen vorzugsweise Methylreste in Frage. Halogenatome sind Fluor, Chlor, Brom und Jod, bevorzugt werden Fluor, Chlor und Brom. Als Halogenalkyl kommt vorzugsweise der Trifluormethylrest in Frage.

Besonders geeignet zur erfindungsgemässen Verwendung sind diejenigen Verbindungen der Formel I,

(a) die Benzochinonderivate, in denen R Wasserstoff bedeutet, d.h. die 1,4-Benzochinone der Formel Ia

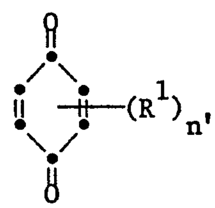

(Ia),

worin n' 1-4 bedeutet und $R^1$ die unter Formel I gegebene Bedeutung hat.

(b) die 1,4-Napthochinonderivate, in denen ein Paar R Wasserstoff bedeuten und das andere ein Butadien -CH=CH-CH=CH- Brückenglied bildet der Formel Ib

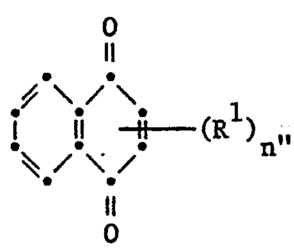

(Ib),

worin n" 1-6 bedeutet und $R^1$ die unter Formel I gegebene Bedeutung hat.

(c) die Anthrachinonderivate, in denen beide Paare R je ein Butadien-Brückenglied bilden der Formel Ic

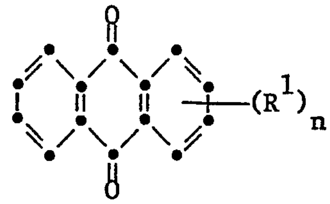

(Ic)

in denen n und $R^1$ die unter Formel gegebene Bedeutung haben, schliesslich die 1,4-Athrachinonderivate, in denen ein Paar R je Wasserstoff und das andere den einen Benz-1,2-di-äthenyl-Rest bedeutet, der Formel Id

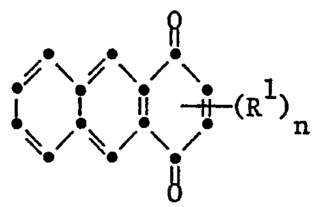

(Id)

worin n und $R^1$ die unter Formel I gegebene Bedeutung haben.

Aus diesen Gruppen sind folgende Verbindungen hervorzuheben:
2-Hydroxy-3-phenylthioheptyl-naphthochinon,
7-Brom-2-hydroxy-3-(2',4'-dihydroxy-4'-methylbutyl-naphthochinon,
2-Hydroxy-3-(2'-hydroxy-4'-methylbut-3-en-1-yl)-naphthochinon,
2-Hydroxy-3-(isobutanoylmethyl)-naphthochinon,
1-(Dimethoxyphosphonamido)-anthrachinon,
1,4-Di-(p-chlorbenzoyloxy)-anthrachinon,
1-Amino-2-hydroxycarbamoyl-anthrachinon,
1-Amino-2-äthoxycarbonyl-anthrachinon.

Die Herbizide, vor deren phytotoxischer Wirkung es Kulturpflanzen zu schützen gilt, können beispielsweise zu einer der folgenden Stoffklassen gehören: Triazine und Triazinone; Phenylharnstoffe, insbesondere 3-(4-Isopropylphenyl)-1,1-dimethylharnstoff ("Isoproturon"); Carbamate und Thiocarbamate; Halogenacetanilide, insbesondere Chloracetanilide; Chloracetamide; Halogenphenoxyessigsäureester; Diphenyläther, wie beispielsweise substituierte Phenoxyessigsäureester und -amide und substituierte Phenoxyphenoxypropionsäureester und -amide; substituierte Pyridyloxyphenoxyessigsäureester und -amide und substituierte Pyridyloxyphenoxypropionsäureester und -amide, insbesondere 2-[4-(3,5-Dichlorpyridyl-2-oxy)-phenoxy]-propionsäure-2-propinylester; Benzoesäurederivate; Nitroaniline; Oxadiazolone; Phosphate; Pyrazole, Sulfonylharnstoffe.

Carbamate und Thiocarbamate: N-(3',4'-Dichlorphenyl)-propionanilid ("propanil"), S-4-Chlorbenzyl-diäthyl-thiocarbamat ("Thiobencarb"), S-Aethyl-N,N-hexamethylen-thiocarbamat ("Molinate"), S-Aethyldipropylthiocarbamat ("EPTC"), N,N-di-sec.Butyl-S-benzyl-thiocarbamat (Drepamon), S-(2,3-Dichlorallyl)-di-isopropylthiocarbamat und S-(2,3,3-Trichlorallyl)-di-isopropylthiocarbamat ("Di- und Tri-allate"), 1-(Propylthiocarbonyl)-decahydro-chinaldin, S-4-Benzyldiäthylthiocarbamat sowie entsprechende Sulfinylcarbamate.

Sulfonylharnstoffe: N-(2-Chlorbenzolsulfonyl)-N'-(4-methoxy-6-methyl-1,3,5-triazinyl)harnstoff (DPX 4189) N-(2-Chloräthylbenzolsulfonyl)-N-(4-methoxy-6-methyl-1,3,5-triazinyl)harnstoff, N-(2-Methoxyäthylbenzolsulfonyl)-N'-(4-methoxy-6-methyl-1,3,5-triazinyl)harnstoff.

Phosphate: S-2-Methylpiperidino-carbonylmethyl-O,O-dipropyl-phosphorodithioat ("Piperophos").

Pyrazole: 1,3-Dimethyl-4-(2',4'-dichlorbenzoyl)-5-(4'-tolylsulfonyloxy)-pyrazol.

Diphenyläther und Nitrodiphenyläther: 2,4-Dichlorphenyl-4'-nitrophenyläther ("Nitrofen"), 2-Chlor-1-(3'-äthoxy-4'-nitrophenoxy)-4-trifluormethyl-benzol ("Oxyfluorfen"), 2',4'-Dichlorphenyl-3-methoxy-4-nitrophenyl-äther ("Chlormethoxinyl"), 2-[4'-(2",4"-Dichlorphenoxy)-phenoxy)-propionsäure-methylester, N-(2'-Methoxyäthyl)-2-[5'-(2"-chlor-4"-trifluormethylphenoxy)-phenoxy]-propionsäureamid.

Benzoesäurederivate: Methyl-5-(2',4'-dichlorphenoxy)-2-nitrobenzoat ("Bifenox"), 5-(2'-Chlor-4'-trifluormethylphenoxy)-2-nitrobenzoesäure ("Acifluorfen"), 2,6-Dichlorbenzonitril ("Dichlobenil").

Triazine und Triazinone: 2,4-Bis(isopropylamino)-6-methylthio-1,3,5-triazin ("Prometryn"), 2,4-bis(äthylamino)-6-methylthio-1,3,5-triazin ("Symetryn"), 2-(1',2'-Dimethylpropylamino)-4-äthylamino-6-methylthio-1,3,5-triazin ("Dimethametryn"), 4-Amino-6-tert.butyl-4,5-dihydro-3-methylthio-1,2,4-triazin-5-on ("Metribuzin").

Phenylharnstoffe: N-(3'-Isopropylphenyl)-N',N'-dimethyl-harnstoff ("Isoproturon"), N-(3',4'-Dimethylbenzyl)-N'-4-tolyl-harnstoff ("Dimuron"), N-(3'-Chlor-4'-isopropylphenyl)-N',N'-(3-methyl-pentamethylen-1,5-yl)-harnstoff.

Nitroaniline: 2,6-Dinitro-N,N-Dipropyl-4-trifluormethylanilin ("Trifluralin"), N-(1'-Aethylpropyl)-2,6-dinitro-3,4-xylidin ("Pendimethalin").

Oxadiazolone: 5-tert.-Butyl-3-(2',4'-dichlor-5'-isopropoxyphenyl)-1,3,4-oxadiazol-2-on ("Oxdiazon").

Pyridyloxyphenoxyderivate: 2-[4'-(3",5"-Dichlorpyridyl-2"-oxy)phenoxy]-propionsäure-(2-propinyl)ester.

Chloracetanilide: 2-Chlor-2',6'-diäthyl-N-(2"-propyloxyäthyl)acetanilid ("Propalochlor"), 2-Chlor-6'-äthyl-N-(2"-methoxy-1"-methyläthyl)-acet-o-toluidid ("Metolachlor"), 2-Chlor-2',6'-diäthyl-N-(butoxymethyl)acetanilid ("Butachlor"), 2-Chlor-6'-äthyl-N-(äthoxymethyl)acet-o-toluidid ("Acetochlor"), 2-Chlor-6'-äthyl-N-(2"-propoxy-1"-methyläthyl)acet-o-toluidi, 2-Chlor-2',6'-dimethyl-N-(2"-meth-

oxy-1"-methyläthyl)acetanilid, 2-Chlor-2',6'-dimethyl-N-(2"-methoxyäthyl)acetanilid ("Diametha chlor"), 2-Chlor-2',6'-diäthyl-N-(pyrazol-1-ylmethyl)acetanilid, 2-Chlor-6'-äthyl-N-(pyrazol-1-ylmethyl)aceto-toluidid, 2-Chlor-6'-äthyl-N-(3,5-dimethyl-pyrazol-1-ylmethyl)aceto-toluidid, 2-Chlor-6'-äthyl-N-(2"-butoxy-1"-methyläthyl)acet-o-toluidid ("Methazolachlor"), 2-Chlor-6'-äthyl-N-(2"-butoxyl-1"-(methyläthyl)acet-o-toluidid, 2-Chlor-2'-trimethylsilyl-N-(butoxymethyl)-acetanilid, 2-Chlor-2',6'-diäthyl-N-(methoxymethyl)acetanilid ("Alachlor") und 2-Chlor-2',6'-diäthyl-N-(äthoxycarbonylmethyl)acetanilid.

Chloracetamide: N-[1-Isopropyl-2-methylpropen-1-yl(1)]-N-(2'-methoxyäthyl)-chloracetamid.

Als Kulturpflanzen, welche durch Chinonderivate der Formel I gegen die phytotoxische Wirkung von Herbiziden geschützt werden können, kommen insbesondere diejenigen in Betracht, die auf dem Nahrungs- oder Textilsektor von Bedeutung sind, wie beispielsweise Kulturhirse, Reis, Mais, Getreidearten (Weizen, Roggen, Gerste, Hafer), Baumwolle, Zuckerrüben, Zuckerrohr und Soja.

Ein geeignetes Verfahren zum Schützen von Kulturpflanzen unter Verwendung von Verbindungen der Formel I besteht darin, dass man Kulturpflanzen, Teile dieser Pflanzen oder für den Anbau der Kulturpflanzen bestimmte Böden vor oder nach dem Einbringen des pflanzlichen Materials in den Boden mit einer Verbindung der Formel I oder einem Mittel, welches eine solche Verbindung enthält, behandelt. Die Behandlung kann vor, gleichzeitig mit oder nach dem Einsatz der Agrarchemikalie erfolgen. Als Pflanzenteile kommen insbesondere diejenigen in Betracht, die zur Neubildung einer Pflanze befähigt sind, wie beispielsweise Samen, Früchte, Stengelteile und Zweige (Stecklinge) sowie auch Wurzeln, Knollen und Rhizome.

Die Erfindung betrifft auch ein Verfahren zur selektiven Bekämpfung von Unkräutern in Kulturpflanzenbeständen, wobei die Kulturpflanzenbestände, Teile der Kulturpflanzen oder Anbauflächen für Kulturpflanzen mit einem Herbizid und einer Verbindung der Formel I oder Ia oder einem Mittel, welches diese Kombination enthält, behandelt. Die die Herbizid/Antidot-Kombination enthaltenden Mittel bilden ebenfalls einen Bestandteil der vorliegenden Erfindung.

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in Betracht. Als Anbauflächen gelten die bereits mit Kulturpflanzen bewachsenen oder die ausgesäten Bodenareale, wie auch die zur Bebauung mit Kulturpflanzen bestimmten Böden.

Die zu applizierende Aufwandmenge Antidot im Verhältnis zur Agrarchemikalie richtet sich weitgehend nach der Anwendungsart. Bei einer Feldbehandlung, welche entweder unter Verwendung einer Tankmischung oder durch getrennte Applikation von Agrarchemikalie und Antidot durchgeführt wird, liegt in der Regel ein Verhältnis von Antidot zu Agrarchemikalie von 1:100 bis 10:1, bevorzugt 1:5 bis 8:1, und insbesondere 1:1, vor.

Dagegen werden bei der Samenbeizung und ähnlichen Einsatzmethoden weit geringere Mengen Antidot im Verhältnis zur Aufwandmenge an Agrarchemikalie/ha Anbaufläche benötigt. Bei der Samenbeizung werden in der Regel 0,1 bis 10 g Antidot/kg Samen, bevorzugt 1 bis 2 kg, appliziert. Wird das Gegenmittel kurz vor der Aussaat unter Samenquellung appliziert, so werden zweckmässigerweise Antidot-Lösungen verwendet, welche den Wirkstoff in einer Konzentration von 1 bis 10 000 ppm, bevorzugt 100 bis 1000 ppm, enthalten.

Die Verbindungen der Formel I können für sich allein oder zusammen mit inerten Zusatzstoffen und/oder den zu antagonisierenden Agrarchemikalien zur Anwendung gelangen.

Die vorliegende Anmeldung betrifft daher auch Mittel, welche Verbindungen der Formel I und inerte Zusatzstoffe und/oder zu antagonisierende Agrarchemikalien, insbesondere Pflanzenschutzmittel und vor allem Herbizide, enthalten.

Zur Applikation werden die Verbindungen der Formel I oder Kombinationen von Verbindungen der Formel I mit zu antagonisierenden Agrarchemikalien zweckmässigerweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt.

Die Formulierungen, d.h., die den Wirkstoff der Formel I oder eine Kombination von Wirkstoff der Formel I mit zu antagonisierender Agrarchemikalie und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel I und gegebenenfalls auch der zu antagonisierenden Agrarchemikalie nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyllaurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxyd-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxydaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ringwood New Jersey, 1980

Dr. Helmut Stache "Tensid Taschenbuch", Carl Hanser Verlag, München/Wien 1981.

Die agrochemischen Zubereitungen enthalten in der Regel 0,1 bis 99 %, insbesondere 0,1 bis 95 %, Wirkstoff der Formel I, 99,9 bis 1 % insbesondere 99,8 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel I oder sie enthaltende Mittel zum Schützen von Kulturpflanzen gegen schädigende Wirkungen von aggressiven Agrarchemikalien kommen verschiedene Methoden und Techniken in Betracht, wie beispielsweise die folgenden:

i) Samenbeizung

a) Beizung der Samen mit einem als Spritzpulver formulierten Wirkstoff durch Schütteln in einem Gefäss bis zur gleichmässigen Verteilung auf der Samenoberfläche (Trockenbeizung). Man verwendet dabei etwa 10 bis 500 g Wirkstoff der Formel I (40 g bis 2 kg Spritzpulver) pro 100 kg Saatgut.

b) Beizung der Samen mit einem Emulsionskonzentrat des Wirkstoffs der Formel I nach der Methode a) (Nassbeizung).

c) Beizung durch Tauchen des Saatguts in eine Brühe mit 50-3200 ppm Wirkstoff der Formel I während 1 bis 72 Stunden und gegebenenfalls

nachfolgendes Trocknen der Samen (Tauchbeizung).

Die Beizung des Saatguts oder die Behandlung des angekeimten Sämlings sind naturgemäss die bevorzugten Metoden der Applikation, weil die Wirkstoffbehandlung vollständig auf die Zielkultur gerichtet ist. Man verwendet in der Regel 10 g bis 500 g, vorzugsweise 50 bis 250 g AS pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung

Eine flüssige Aufarbeitung eines Gemisches von Gegenmittel und Herbizid (gegenseitiges Mengenverhältnis zwischen 10:1 und 1:10) wird verwendet, wobei die Aufwandmenge an Herbizid 0,1 bis 10 kg pro Hektar beträgt. Solche Tankmischung wird vorzugsweise vor oder unmittelbar nach der Aussaat appliziert oder 5 bis 10 cm tief in den noch nicht gesäten Boden eingearbeitet.

iii) Applikation in die Saatfurche

Das Gegenmittel wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) Kontrollierte Wirkstoffabgabe

Der Wirkstoff wird in Lösung auf mineralische Granulatträger oder polymerisierte Granulate (Harnstoff/Formaldehyd) aufgezogen und trocknen gelassen. Gegebenenfalls kann ein Ueberzug aufgebracht werden (Umhüllungsgranulate), der es erlaubt, den Wirkstoff über einen bestimmten Zeitraum dosiert abzugeben.

Bei den substituierten Chinonderivaten der Formel I handelt es sich um bekannte Derivate von para-ständigen Chinonen. Ihre Herstellung ist nicht Gegenstand dieser Erfindung. Sie werden entweder durch chemische Umsetzungen an den Grundkörper 1,4-Benzochinon, 1,4-Naphthochinon, 1,4- und 5,8-Anthrachinon hergestellt oder es handelt sich um Naturstoffe. Als Beispiele seien genannt:

"3-Nitroalizalin", 1,2-Dihydroxy-3-nitro-5,8-anthrachinon, J. Chem. Soc. 121, 1376 (1922),
"Alloe-Emodin" 1,8-Dihydroxy-3-hydroxymethyl-5,8-anthrachinon, J. Chem. Soc. 1932, 2573 oder Tetrahedron Letters 5 (1960) 15,
"Aloetinsäure" 1,3,6,8-Tetranitro-4,5-dihydroxy-2-hydroxymethyl-5,8-anthrachinon, Ann 134, 236 (1865),
1-Aminoanthrachinon und 1-Aminoanthrachinon-2-carbonsäure, Helv. Chim. Acta 10, 667 (1927),
"Anisindione" 2-(4'-Methoxyphenyl)-1,3-indandion, USP 2 899 358,
"Anthragallol" 1,2,3-Trihydroxyanthrachinon Ber. 10 (1877) 39
"Boronal" 1-Hydroxy-4-(p-toluidino)anthrachinon
"Anthramfin" 1,5-Dihydroxyanthrachinon Ber. 46 (1913) 85
"Aurantiogliochadin" 2,3-Dimethoxy, 5,6-dimethyl-1,4-benzochinon 3. Chem. Soc.1953 815 und 1959 1660
"Chimaphilin", 2,7-Dimethyl-1,4-naphthochinon Gazz. Chim. Hal. 83 (1953) 393 und 86 (1956) 243
"Chloranil" 2,3,4,5-Tetrachlor-1,4-benzochinon
"Chloranilsäure" 2,5-Dichlor,3,6-dihydroxy-1,4-benzochinon 3. Am. Chem. Soc. 46 (1924) 1866
"Chrysaminsäure" 1,8-Dihydroxy-2,4,5,7-tetranitro-anthrachinon Ann 183 193
"Chrysophansäure" 1,8-Dihydroxy-3-methylanthrachinon J. Chem. Soc. 99 (1911) 946
"Dichlone" 2,3-Dichloro-1,4-naphthochinon USP 2 975 196
2,6-Dimethoxychinon, Ber. 11 (1878) 337
"Durochinon" Tetramethyl-1,4-benzochinon Org. Synthesis 10 (1930) 40

"Fumigatin" 3-Hydroxy-2-methoxy-5-methyl-1,4-benzochinon, J. Chem. Soc. 1941 670

6-Hydroxy-2-methyl-1,4-naphthochinon, C.A. 46 (1952) 67046

"Juglone", 5-Hydroxy-1,4-naphthochinon Ber. 47 (1914) 2798

"Lapachol" 2-Hydroxy-3-13-methylbut-2-enyl 1,4-naphthochinon J. Am. Chem. Soc. 49 (1927) 857

"Lapinone", 2-Hydroxy-3-(9-hydroxy-9-pentyl-tetradecyl)1,4-naphthochinon J. Am. Chem. Soc. 70 (1948) 3207

"Lawsone", 2-Hydroxy-1,4-naphthochinon J. Am. Chem. Soc. 70 (1948) 3165

"Menadion" 2-Methyl-1,4-naphthochinon J. Biol.Chem. 133 (1940) 391

2-Methylanthrachinon Org. Synth. 4 (1925) 43

"Munjistin" 1,3-Dihydroxy-2-carbonsäure-5,8-anthrachinon J. Chem. Soc. 1936 1714

"Perezone"2-(2',5'Dimethyl-hex-4-yl)-2-hydroxy-3-methyl-1,4-benzochinon Ber. 18 (1885) 709

"Phthiocol" 2-Hydroxy-3-methyl-1,4-naphthochinon J. Am Chem. Soc 72 (1950) 379

"Plumbagin", 5-Hydroxy-2-methyl-1,4-naphthochinon J. Am Chem. Soc. 58 (1936) 572

"Chinizarin", 1,4-Dihydroxy-5,8-anthrachinon USP 1 845 632

"Rubiadin" 1,3-Dihydroxy-2-methyl-5,8-anthrachinon Chem. Pharm. Bull 8 (1960) 417

"Spinusolin" 2,5-Dihydroxy-3-methoxy-6-methyl-1,4-benzochinon Biochem. J. 32 (1938) 803

"Ubidionone" 2,3-Dimethoxy-6-methyl-5-(3'methylbut-2-en-yl)-1,4-benzochinone Progr. in Fats + Lipids Vol 7 Pergamon Press (21964) 267

Vitamin K-S (II) S-(2-methyl-1,4-naphthochinon)β-propionsäure J. Am. Chem. Soc. 74 (1952) 2120

Diese und die in den nachfolgenden Tabellen genannten Verbindungen und die folgenden Beispiele dienen zur Illustrierung der Erfindung. Prozentangaben und Teile beziehen sich auf das Gewicht.

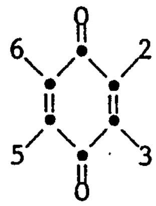

Farnesyl = 3,7,11-Trimethyl-2,6,10-dodecatrien

Geranyl = trans-3,7-Dimethyl-2,6-octadien-1-ol

Tabelle 1  1,4-Benzochinonderivate

| Verbindung No. | Substituent in Stellung | | | |
|---|---|---|---|---|
| | 2 | 3 | 5 | 6 |
| 1.1 | Br | $C_8H_{17}$ | H | H |
| 1.2 | Br | H | $C_8H_{17}$ | H |
| 1.3 | Br | Farnesyl | H | H |
| 1.4 | Br | H | Farnexyl | H |
| 1.5 | Br | Geranyl | H | H |
| 1.6 | Br | H | Geranyl | H |
| 1.7 | Br | $CH_3$ | Br | $C_3H_7i$ |
| 1.8 | $NH_2$ | Farnesyl | H | H |
| 1.9 | $NH_2$ | H | Geranyl | H |
| 1.10 | Cl | Farnesyl | H | H |
| 1.11 | CL | H | Farnesyl | H |
| 1.12 | Br | Br | Geranyl | H |
| 1.13 | $OCH_3$ | Farnesyl | H | H |
| 1.14 | $OCH_3$ | H | Geranyl | H |
| 1.15 | H | $OCH_3$ | Geranyl | H |
| 1.16 | I | I | I | I |
| 1.17 | Br | Br | Br | Br |
| 1.18 | $NO_2$ | $i-C_3H_7$ | $CH_3$ | $NO_2$ |
| 1.19 | Br | $n-C_6H_{13}$ | Br | Br |
| 1.20 | Br | $CH_3$ | Br | Br |
| 1.21 | Cl | Cl | Cl | Cl |
| 1.22 | H | $t-C_4H_9$ | Br | Br |

Tabelle 1 1,4-Benzochinonderivate (Fortsetzung)

| Verbindung No. | Substituent in Stellung 2 | 3 | 5 | 6 |
|---|---|---|---|---|
| 1.23 | H | t-$C_4H_9$ | Cl | Cl |
| 1.24 | H | t-$C_4H_9$ | I | I |
| 1.25 | Br | i-$C_3H_7$ | Br | $CH_3$ |
| 1.26 | H | $CH_2CH_2C(CH_3)=CH_2$ | $CH_3$ | $CH_3$ |
| 1.27 | H | i-$C_3H_7$ | H | $CH_3$ |
| 1.28 | H | t-$C_4H_9$ | H | Br |
| 1.29 | H | i-$C_3H_7$ | I | $CH_3$ |
| 1.30 | H | n-$C_6H_{13}$ | H | H |
| 1.31 | Cl | t-$C_4H_9$ | Cl | t-$C_4H_9$ |
| 1.32 | H | H | H | H |
| 1.33 | H | $CH_3$ | H | H |
| 1.34 | H | t-$C_4H_9$ | H | H |
| 1.35 | H | t-$C_4H_9$ | H | t-$C_4H_9$ |
| 1.36 | H | t-$C_4H_9$ | t-$C_4H_9$ | H |
| 1.37 | H | $CH_3$ | $CH_3$ | $CH_3$ |
| 1.38 | $CH_3$ | $CH_3$ | $CH_3$ | $CH_3$ |
| 1.39 | H | i-$C_3H_7$ | i-$C_3H_7$ | H |
| 1.40 | H | $CH_3$ | $CH_3$ | H |

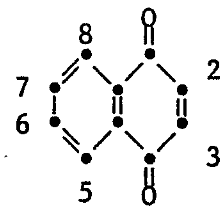

<u>Tabelle 2</u>  1,4-Naphthochinonderivate

| Verbindung No. | Substituent in Stellung | | |
| --- | --- | --- | --- |
| | 2 | 3 | 5-8 |
| 2.1 | OH | $-(CH_2)_7SC_6H_5$ | - |
| 2.2 | OH | 1 2 3 4<br>$-CH_2-CHOH-C(CH_3)_2OH$ | 7Br |
| 2.3 | OH | 1 2 3 4<br>$-CH_2-CH-OH-C(CH_3)=CH_2$ | - |
| 2.4 | OH | $-CH_2-CO-CH(CH_3)_2$<br>1 2 3 | - |
| 2.5 | Cl | $NH_2$ | - |
| 2.6 | Cl | Cl | 5,8 $(OH)_2$ |
| 2.7 | OH | $CH_3$ | - |
| 2.8 | H | H | - |
| 2.9 | $CH_3$ | $CH_3$ | 5,8 $(OH)_2$ |

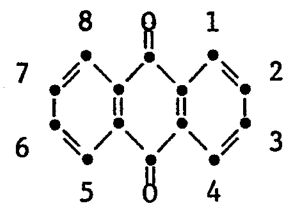

<u>Tabelle 3</u> 5,8-Anthrachinonderivate

| Verbindung No. | Substituent in Stellung 1 | 2 | 3-8 |
|---|---|---|---|
| 3.1 | $-NHPO(OCH_3)_2$ | H | - |
| 3.2 | $-OCO-C_6H_4Cl(4)$ | H | $4-OCO-C_6H_4Cl(4)$ |
| 3.3 | $-NH_2$ | -CON(OH)H | - |
| 3.4 | $-NH_2$ | $-COOC_2H_5$ | - |
| 3.5 | Br | H | - |
| 3.6 | H | Br | - |
| 3.7 | $-C_4H_9n$ | Cl | - |
| 3.8 | $OCH_3$ | H | $4-OCH_3$ |
| 3.9 | $NH_2$ | H | - |
| 3.10 | H | 3,5-Dimethyl-1,2-oxazol-4-ylcarbamido | - |
| 3.11 | 2,5-Dioxo-imidazolidin-1-yl | H | - |
| 3.12 | Benzolyamido | -COOH | - |
| 3.13 | $NH_2$ | $-COOC_6H_{13}n$ | - |
| 3.14 | $OCH_3$ | H | $4-NH-i-C_3H_7$ |
| 3.15 | p-Tolylmercapto | H | $4-NH-i-C_3H_7$ |
| 3.16 | $-SCH_2CH_2OH$ | H | - |
| 3.17 | $NH_2$ | CN | $3-CN, 4-NHCH_3$ |

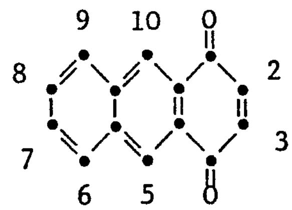

Tabelle 4 1,4-Anthrachinonderivate

| Verbindung Nr. | Substituent in Stellung | | |
|---|---|---|---|
| | 2 | 3 | 5-10 |
| 4.1 | H | H | 5-Cl, 10-OH |
| 4.2 | Br | $C_3H_7i$ | |

Formulierungsbeispiele für flüssige Wirkstoffe der Formel I

(%=Gewichtsprozent)

Emulsions-Konzentrate

| | a) | b) | c) |
|---|---|---|---|
| Wirkstoff aus Tabellen 1-4 | 25 % | 40 % | 50 % |
| Ca-Dodecylbenzolsulfonat | 5 % | 8 % | 6 % |
| Ricinusöl-polyäthylenglykoläther (36 Mol AeO) | 5 % | - | - |
| Tributylphenol-polyäthylenglykoläther (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| Lösungen | a) | b) | c) | d) |
|---|---|---|---|---|
| Wirkstoff aus Tabellen 1-4 | 80 % | 10 % | 5 % | 95 % |
| Aethylenglykol-monomethyl-äther | 20 % | - | - | - |
| Polyäthylenglykol M G 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

| Granulate | a) | b) |
|---|---|---|
| Wirkstoff aus Tabellen 1-4 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| Stäubemittel | a) | b) |
|---|---|---|
| Wirkstoff aus Tabellen 1-4 | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I
(%= Gewichtsprozent)

| Spritzpulver | a) | b) | c) |
|---|---|---|---|
| Wirkstoff aus Tabellen 1-4 | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff aus Tabellen 1-4 | 10 % |
| Octylphenolpolyäthylenglykoläther (4-5 Mol AeO) | 3 % |
| Ca-Dodecylbenzolsulfonat | 3 % |
| Ricinusölpolyglykoläther (35 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff aus Tabellen 1-4 | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

Extruder Granulat

| | |
|---|---|
| Wirkstoff aus Tabellen 1-4 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

Umhüllungs-Granulat

| | |
|---|---|
| Wirkstoff aus Tabellen 1-4 | 3 % |
| Polyäthylenglykol (M G 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

Suspensions-Konzentrat

| | |
|---|---|
| Wirkstoff aus Tabellen 1-4 | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Biologische Beispiele

### Versuch mit Herbizid und Antidote in der Nahrlösung keimender Soja-Pflanzen

Man verwendet Sojasamen, die in den eingesetzten Konzentrationen des Herbizides erwartungsgemäss geschädigt werden sollten und sät sie in gekörntes Zonolith (expandierter Vermikulit), das sich in einem an der Unterseite durchlöcherten Plastik-Blumentopf (oberer Durchmesser 6 cm) befindet. Dieser wird in einen zweiten durchsichtigen Plastik-Blumentlpf (oberer Durchmesser 7 cm) gestellt, in dem sich ca. 50 ml der mit Herbizid und Antidote vorbereiteten Nährlösung befindet, die nunmehr kapillar im Filtermaterial des kleineren Topfes aufsteigt und Samen und keimende Pflanzen benetzt. Täglich wird der Flüssigkeitsverlust mit einer Nährlösung auf 50 ml ergänzt. 3 Wochen nach Testbeginn wird die Schutzwirkung des Antidots in Prozent bonitiert. Als Referenzen dienen dabei die mit Herbizid allein behandelten Pflanzen (keine Schutzwirkung), sowie die vollständig unbehandelte Kontrolle (100% relative Schutzwirkung).

Die Resultate sind untenstehend angegeben.

Herbizid: N-(2-Methoxycarbonylphenylsulfonyl)-N'-(3'-difluormethoxy-5'-methylpyrimidin-2'-yl)-harnstoff.
Aufwandmenge 0.5 ppm.

Antidote:. 2-Hydroxy-3-phenylthioheptyl-naphthochinon.
Verbindung 2.1. Aufwandmenge 10 ppm.

relative Schutzwirkung: 25%.

Versuch mit Herbizid und Antidote in der Nährlösung keimender Reispflanzen

Es wird eine Nährlösung hergestellt, die ein Herbizid sowie die als Antidote zu prüfende Substanz enthält.

Man verwendet Reissamen, die in den eingesetzten Konzentrationen des Herbizides erwartungsgemäss geschädigt werden sollten, und sät sie in gekörntes Zonolith (expandierter Vermikulit), das sich in einem an der Unterseite durchlöcherten Plastik-Blumentopf (oberer Durchmesser 6 cm) befindet. Dieser wird in einen zweiten durchsichtigen Plastik-Blumentopf (oberer Durchmesser 7 cm) gestellt, in dem sich ca. 50 ml der mit Herbizid und Antidote vorbereiteten Nährlösung befindet, die nunmehr kapillar im Filtermaterial des kleineren Topfes aufsteigt und Samen und keimende Pflanzen benetzt. Täglich wird der Flüssigkeitsverlust mit einer Nährlösung auf 50 ml ergänzt. 3 Wochen nach Testbeginn wird die Schutzwirkung des Antidots in Prozent bonitiert. Als Referenzen dienen dabei die mit Herbizid allein behandelten Pflanzen (keine Schutzwirkung) sowie die vollständig unbehandelte Kontrolle (100% relative Schutzwirkung).

Die Resultate sind untenstehend angegeben.

Herbizid: 2-Chlor-2',6'-diäthyl-N-(2"-propyloxyäthyl)-acetanilid "Pretilachlor"

| Antidote Verbindung No. | Aufwandmenge | Herbizid Aufwandmenge | relative Schutzwirkung |
|---|---|---|---|
| 2.2 | 10 ppm | 4 ppm | 50% |
| 2.3 | 10 ppm | 4 ppm | 38% |
| 2.4 | 10 ppm | 4 ppm | 50% |

Vorauflaufversuch mit Getreide. Das Antidote wird als Samenbeizung appliziert

Weizen und Gerstensamen wurden mit der als Safener zu prüfenden Substanz in einem Glasbehälter gemischt. Samen und Produkt wurden durch Schütteln und Rotation des Behälters gut zusammengemischt. Anschliessend wurden Plastikcontainer (25 cm lang, 17 cm breit und 12 cm hoch) mit sandiger Lehmerde gefüllt und die gebeizten Samen eingesät. Nach dem Bedecken des Samens wird das Herbizid auf die Bodenoberfläche gesprüht. 19 Tage nach der Applikation wurde die Schutzwirkung des Safeners in Prozent bonitiert.

Als Referenzen dienen dabei die mit dem Herbizid allein behandelten Pflanzen (keine Schutzwirkung) sowie die vollständig unbehandelte Kontrolle.

(100% relative Schutzwirkung). Die Resultate sind untenstehend zusammengefasst.

Herbizid: N-(2-Chloräthyloxyphenylsulfonyl)-N'-(4'-methoxy-6'-methyl-1,3,5-triazin-2-yl)-harnstoff. Aufwandmenge 15 g/ha.

Antidote: 2-Amino-3-äthoxycarbonyl-5,10-anthrachinon. Verbindung 3.4. Aufwandmenge 0,125 g/kg Samen.
Relative Schutzwirkung: Weizen: 12,5%,
Gerste 12,5%.

Vorauflaufversuch in Soja. Antidote und Herbizid werden als Tankmischung appliziert

Töpfe (oberer Durchmesser 6 cm) werden mit sandiger Lehmerde gefüllt und Sojasamen der Sorte "Hark" werden eingesät. Nach dem Bedecken der Samen wird die als Antidote zu prüfende Substanz zusammen mit dem Herbizid in verdünnte Lösung als Tankmischung auf die Boden oberfläche versprüht. 21 Tage nach der Herbizidapplikation wird die

Schutzwirkung des Antidots in Prozent bonitiert. Als Referenzen dienen dabei die mit Herbizid allein behandelten Pflanzen (keine Schutzwirkung), sowie die vollständig unbehandelte Kontrolle (100% relative Schutzwirkung).

Die Resultate sind untenstehend zusammengefasst.

Herbizid: 4-Amino-6-tert.butyl-4,5-dihydro-3-methylthio-1,2,4-triazin-5(4H)-on "Metribuzin".

| Verbindung No. | Antidote Aufwandmenge kg/ha | Herbizid Aufwandmenge kg/ha | relative Schutzwirkung % |
|---|---|---|---|
| 2.5 | 1 | 1 | 38 |
| 2.7 | 1 | 1 | 13 |
| 2.9 | 0.25 | 1 | 50 |
| 3.1 | 1.5 | 0.5 | 38 |
| 3.2 | 1.5 | 0.5 | 38 |
| 3.9 | 0.75 | 0.75 | 25 |
| 3.10 | 0.75 | 0.19 | 38 |
| 3.11 | 0.75 | 0.75 | 38 |
| 3.11 | 0.75 | 0.19 | 25 |
| 3.12 | 0.75 | 0.75 | 25 |
| 3.13 | 0.75 | 0.75 | 25 |
| 3.14 | 0.75 | 0.75 | 25 |
| 3.15 | 0.75 | 0.75 | 25 |
| 3.16 | 0.75 | 0.19 | 25 |
| 3.17 | 0.75 | 0.19 | 25 |
| 4.1 | 1.5 | 0.5 | 38 |

Nachauflaufversuch in Weizen. Antidote und Herbizid werden als Tankmischung appliziert

Weizensamen der Sorte "Farnese" werden in Plastiktöpfe (oberer Durchmesser 11 cm), die 0,5 l Erde enthalten, im Gewächshaus ausgesät. Nach dem Bedecken der Samen wird die als Safener zu prüfende Substanz zusammen mit dem Herbizid als Tankmischung im Nachauflauf appliziert. 20 Tage nach der Applikation wird die Schutzwirkung des Safeners in Prozent bonitiert. Als Referenzen dienen dabei die mit Herbizid allein behandelten Pflanzen (keine Schutzwirkung), sowie die vollständig unbehandelten Kontrolle (100% relative Schutzwirkung).

Die Resultate sind untenstehend zusammengefasst:

Herbizid: α-[4-(3',5'-Dichlorpyridyl-2'-oxy)-phenoxy]-propionsäurepropinylester. Aufwandmenge: 0,5 kg/ha.

Antidote: 2-Amino-3-hydroxycarbamoyl-anthrachinon, Verbindung 3.3, Aufwandmenge 1.5 kg/ha.

Relative Schutzwirkung: 75%.

Patentansprüche

1. Mittel zum Schützen von Kulturpflanzen vor der phytotoxischen Wirkung von Herbiziden, dadurch gekennzeichnet, dass es neben inerten Zutaten wie Trägerstoff und Verteilungsmittel als antagonistischwirksame Komponente ein Chinonderivat der Formel I enthält.

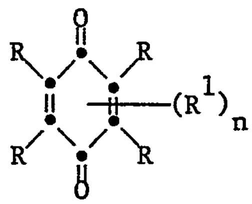
(I),

worin n eine Zahl von 1 bis 8

R Wasserstoff oder je zwei benachbarte R zusammen die Brückenglieder, welche nötig sind, um einen aromatischen mono- oder bicyclischen Ring zu bilden, der anstelle einer -CH= Gruppe auch ein Stickstoffatom enthalten kann, während jedes

$R^1$ Hydroxy, Halogen, Cyan, $C_1$-$C_{18}$-Alkyl, $C_3$-$C_{18}$-Alkenyl, $C_3$-$C_{18}$-Alkinyl, $C_1$-$C_{18}$-Alkoxy, $C_3$-$C_{18}$-Alkenyloxy, $C_3$-$C_{18}$-Alkinyloxy, $C_1$-$C_{18}$-Alkylthio, $C_3$-$C_{18}$-Alkanoyloxy, $C_3$-$C_{18}$-Alkenoyloxy, $C_1$-$C_{18}$-Alkoxycarbonyl, $C_3$-$C_{18}$-Alkenyloxycarbonyl, Carboxyl-$C_1$-$C_{18}$-alkyl, $C_1$-$C_{18}$-Alkoxycarbonyl-$C_1$-$C_{18}$-alkyl, $C_3$-$C_{12}$-Alkenylcarbonyl-$C_1$-$C_{18}$-alkyl, Amino, $C_1$-$C_{18}$-Alkylamino, Di-($C_1$-$C_{18}$-alkyl)amino, Carbamoyl, $C_1$-$C_{18}$-Alkylcarbamoyl, Di-($C_1$-$C_{18}$-alkyl)phosphonylamido; einen Phenyl-, Phenoxy-, Phenylthio-, Benzoyl- oder Benzoyloxyrest, welcher unsubstituiert oder durch Halogen, Cyano, Nitro, Amino, Carboxyl, $C_1$-$C_4$-Alkyl, $C_1$-$C_4$-Halogenalkyl, $C_1$-$C_4$-Alkoxy, $C_1$-$C_4$-Alkylthio oder $C_1$-$C_4$-Alkoxycarbonyl

bedeutet.

2. Mittel gemäss Anspruch 1, dadurch gekennzeichnet, dass es als wirksame Komponente ein 1,4-Benzochinonderivat der Formel (Ia) enthält,

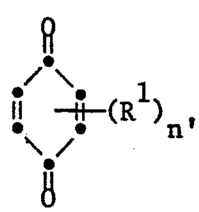
(Ia),

worin n' 1-4 bedeutet und

die $R^1$ die im Anspruch 1 gegebene Bedeutung haben.

3. Mittel gemäss Anspruch 1, dadurch gekennzeichnet, dass es als wirksame Komponente ein 1,4-Naphthochinonderivat der Formel Ib enthält.

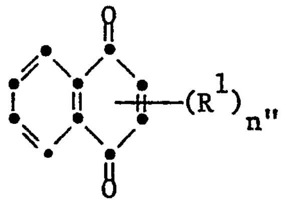

(Ib),

worin n" 1-6 bedeutet und die $R^1$ die im Anspruch 1 gegebene Bedeutung haben.

4. Mittel gemäss Anspruch 1, dadurch gekennzeichnet, dass es als wirksame Komponente ein Anthrachinonderivat der Formel Ic enthält

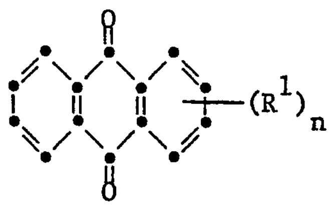

(Ic),

worin n und $R^1$ die im Anspruch 1 gegebene Bedeutung haben.

5. Mittel gemäss Anspruch 1, dadurch gekennzeichnet, dass es als wirksame Komponente ein 1,4-Anthrachinonderivat der Formel Id enthält.

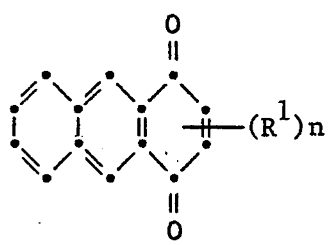

(Id)

worin n und $R^1$ die in Anspruch 1 gegebene Bedeutung haben.

6. Mittel gemäss Anspruch 1, dadurch gekennzeichnet, dass es als wirksame Komponente 2-Hydroxy-3-phenylthioheptyl-naphthochinon enthält.

7. Mittel gemäss Anspruch 1, dadurch gekennzeichnet, dass es als wirksame Komponente 7-Brom-2-hydroxy-3-(2',4'-dihydroxy-4'-methylbutyl-naphthochinon enthält.

8. Mittel gemäss Anspruch 1, dadurch gekennzeichnet, dass es als wirksame Komponente 2-Hydroxy-3-(2'-hydroxy-4'-methyl-but-3-en-1-yl)-naphthochinon enthält.

9. Mittel gemäss Anspruch 1, dadurch gekennzeichnet, dass es als wirksame Komponente 2-Hydroxy-3-(isobutanoylmethyl)-naphthochinon enthält.

10. Mittel gemäss Anspruch 1, dadurch gekennzeichnet, dass es als wirksame Komponente 1-(Dimethoxyphosphonamido)-anthrachinon enthält.

11. Mittel gemäss Anspruch 1, dadurch gekennzeichnet, dass es als wirksame Komponente 1,4-Di-(p-chlorbenzoyloxy)-anthrachinon enthält.

12. Mittel gemäss Anspruch 1, dadurch gekennzeichnet, dass es als wirksame Komponente 1-Amino-2-hydroxycarbamoyl-anthrachinon enthält.

13. Mittel gemäss Anspruch 1, dadurch gekennzeichnet, dass es als wirksame Komponente 1-Amino-2-äthoxycarbonyl-anthrachinon enthält.

14. Mittel gemäss Anspruch 1, dadurch gekennzeichnet, dass es als wirksame Komponente 5-Chlor-10-hydroxy-1,4-anthrachinon enthält.

15. Mittel zum selektiven Bekämpfen von Unkräutern in Kulturen von Nutzpflanzen, dadurch gekennzeichnet, dass es neben inerten Zutaten wie Trägerstoff und Verteilungsmittel als wirksame Komponente (a)

ein Herbizid und (b) ein Chinonderivat der Formel I, Anspruch 1, als für die Kultur antagonistisch wirkendes Gegenmittel enthält.

16. Verfahren zum Schützen von Kulturpflanzen vor der phytotoxischen Wirkung von Herbiziden, dadurch gekennzeichnet, dass man die Kulturpflanzen, Teile oder Samen derselben oder den für den Anbau bestimmten Boden mit einer wirksamen Menge eines Chinonderivats der Formel I, Anspruch 1, behandelt.

17. Verfahren gemäss Anspruch 16, dadurch gekennzeichnet, dass die Kulturen Getreide, Mais, Reis, Zuckerrübe, Soja und Baumwolle sind.

18. Verfahren zum selektiven Bekämpfen von Unkräutern in Nutzpflanzenkulturen, dadurch gekennzeichnet, dass man die Kultur oder den für den Anbau bestimmten Boden mit einer wirksamen Menge (a) eines Herbizides und (b) eines Chinonderivates der Formel I, Anspruch 1, behandelt.

19. Das Saat- oder Vermehrungsgut von Nutzpflanzen, welches mit einem Chinonderivat der Formel I, Anspruch 1 behandelt ist.

FO 7.5/NU/am*

Europäisches Patentamt

**EUROPÄISCHER RECHERCHENBERICHT**

0134198

Nummer der Anmeldung

EP 84 81 0384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | | | A 01 N 25/32 |
| A | CHEMICAL ABSTRACTS, Band 79, Nr. 13, 1. Oktober 1973, Seiten 161,162, Nr. 74943n, Columbus, Ohio, USA; & JP - A - 73 36332 (KANESHO CO., LTD.) 29.05.1973 * Insgesamt * --- | 1,3,15 -18 | |
| A | CHEMICAL ABSTRACTS, Band 81, Nr. 7, 19. August 1974, Seite 151, Nr. 34576e, Columbus, Ohio, USA; & JP - A - 73 34210 (MITSUI TOATSU CHEMICALS, INC.) 19.10.1973 * Insgesamt * --- | 1,3,15 -18 | |
| A | CHEMICAL ABSTRACTS, Band 99, Nr. 21, 21. November 1983, Seite 250, Nr. 171337p, Columbus, Ohio, USA; & JP - A - 58 113 106 (TEIJIN LTD.) 05.07.1983 * Insgesamt * --- | 1,2 | RECHERCHIERTE SACHGEBIETE (Int. Cl.4) |
| | | | A 01 N |
| A | DE-A-2 210 654 (GAF) * Ansprüche * ----- | 1,4 | |

Der vorliegende Recherchenbericht wurde für alle Patentansprüche erstellt.

| Recherchenort | Abschlußdatum der Recherche | Prüfer |
|---|---|---|
| DEN HAAG | 12-11-1984 | FLETCHER A.S. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503. 03.82